**Europäisches Patentamt**

**European Patent Office**

**Office européen des brevets**

(19)

(11) Publication number: **0 001 013**
**B1**

(12) **EUROPEAN PATENT SPECIFICATION**

(45) Date of publication of patent specification: **02.12.81**

(21) Application number: **78300312.2**

(22) Date of filing: **21.08.78**

(51) Int. Cl.³: **C 08 L 27/06, C 08 K 7/14, B 29 D 3/02**

(54) **Glass reinforced rigid PVC.**

(30) Priority: **23.08.77 GB 3538377**
**17.04.78 GB 1506978**

(43) Date of publication of application:
**07.03.79 Bulletin 79/5**

(45) Publication of the grant of the European patent:
**02.12.81 Bulletin 81/48**

(84) Designated Contracting States:
**BE DE FR GB NL SE**

(56) References cited:
**AU - B - 447 580**
**FR - A - 2 331 586**
**GB - A - 1 198 324**
**CHEMICAL ABSTRACTS, vol. 83, 98446m 1975**

(73) Proprietor: **TBA Industrial Products Limited**
**20, St. Mary's Parsonage**
**Manchester M3 2NL (GB)**

(72) Inventor: **Stabler, Howard Grafton**
**23 Meadow Park**
**Irwell Vale Ramsbottom Lancashire (GB)**

(74) Representative: **Hadfield, Robert Franklin et al,**
**20 St. Mary's Parsonage**
**Manchester M3 2NL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 001 013

## Glass reinforced rigid PVC

This invention relates to thermoplastic sheet materials, and more particularly to such materials based on vinyl chloride polymers and containing fibrous reinforcements.

Thermoplastic sheet materials containing reinforcing fibres which are uniformly dispersed throughout and all lie in or substantially in the plane of the sheet are described in our UK Patents Numbers 1,068,064 and 1,199,283. However these sheet materials contained only a small proportion of filler, talc being used in Examples, and the fibre reinforcements contained at least a proportion of asbestos.

The physical properties of these sheet materials are excellent and the asbestos fibres are fully wetted out and encapsulated by the polymer so that no health hazard arises during normal use. However, certain applications require the sheet to be cut, drilled, sawn or punched and these post-manufacturing operations can release small amounts of asbestos fibre.

The formulations described in the above-identified patents contain 30 to 70% by weight of fibre and a much lower proportion of filler, if the latter is present. The process used to make the thermoplastic sheet materials with the fibres lying in the plane of the sheet involves building up the sheet from successive very thin (e.g. 0.01016 mm thick) layers of the thermoplastic material in order to ensure that the fibres lie as required. In the formulations exemplified in UK Patents Nos. 1,068,064 and 1,199,283 the asbestos cannot be replaced by another mineral fibre such as glass and satisfactory results still obtained by the same process.

We have now found, however, that by the use of reduced amounts of fibre with particular proportions of particulate fillers thermoplastic sheet materials can be manufactured containing glass fibres as the sole fibrous reinforcement.

According to the present invention a rigid sheet comprises a polymeric constituent formed from a monomer or monomers in which vinyl chloride at least predominates, fibres and particulate filler, the fibres and filler being uniformly dispersed throughout and the fibres all lying in, or substantially in, the plane of the sheet, and is characterised in that the fibres are glass fibres, the amount of glass fibre being in the range 5 to 30 per cent by weight of the total weight of the sheet the amount of filler being in the range 20 to 50 per cent and the amount of polymeric constituent being in the range 30 to 75 per cent.

The rigid sheet may conveniently be made by the method described in detail in UK Patent No. 1,068,064 in which the polymeric constituent, in the form of a solution in a volatile organic solvent or of a mixture of a solution in a volatile organic solvent and a dispersion, and the other ingredients are converted into a substantially homogeneous dough-like mass. The mass is built up continuously in laminations on a hot calendar roll, the sheet thus formed is cut on the roll, removed and allowed to cool. Several such sheets are then generally laminated together by application of heat and pressure.

At this lamination stage an extra reinforcing layer of a different material may be incorporated into the sheet.

The polymeric constituent is preferably a material which is rigid at room temperature when unreinforced, containing little or no plasticiser.

The polymer constituent may be a mixture of a vinyl chloride homopolymer with a copolymer of vinyl chloride which is soluble in an organic solvent such as vinyl chloride/vinyl acetate copolymer or vinyl chloride/vinylidene chloride copolymer.

Alternatively, if desired, a special soluble vinyl chloride homopolymer of the kind used in our UK Patent Number 1,199,283 may be used, in which case the process for making the sheet may be slightly modified by using a single doughlike mass as described in the latter patent specification.

Chlorinated versions of the vinyl chloride polymers mentioned in the two immediately preceding paragraphs may also be used. Chlorinated poly (vinyl chloride) is prepared by a chlorination reaction on the polymer itself (after polymerisation). Thus whilst the usual poly (vinyl chloride) contains approximately 57% by weight of combined chlorine, a chlorinated version may contain up to 70 per cent by weight of chlorine.

In each case, where maximum fire resistance is not required, a minor amount of a latex of a film-forming polymer may be incorporated in the dough-like mass. Such polymers as acrylonitrile copolymers, e.g. acrylonitrile/butadiene copolymers and copolymers of acrylonitrile, butadiene and styrene; copolymers of ethylene and vinyl acetate; copolymers of vinyl chloride and vinyl fumarate, polyacrylates, polymethacrylates and chlorinated polyethylenes, may be added in this way. The total proportion of this polymer is to be kept low, no more than 10% by weight of total polymeric constituent, and its function is primarily to improve the processability of the dough-like mass.

The glass fibre is conveniently used in the form of chopped strands of length in the range 3 to 6 mm and has a surface dressing appropriate to promote adhesion to the polymeric constituent. The preferred amount of glass to use is in the range 8% to 20% by weight of the sheet in order to obtain appreciable reinforcement of the sheet whilst keeping cost down, since glass fibre is a relatively costly ingredient.

The function of the particulate filler which is used is to obtain the correct consistency of dough for the sheet to be manufactured without detracting from the fire resistance of the sheet.

2

The preferred amount of filler depends to some extent on the amount of glass fibres used, the ratio by weight of filler to glass fibre being preferably greater than 1 to 1 and more preferably between 1 to 1 and 4 to 1.

Examples of suitable fillers are calcium carbonate (including limestone and chalk); calcium magnesium carbonate (including dolomite); calcium hydroxide; magnesium carbonate (magnesite); oxides of aluminium, titanium, zinc, magnesium or antimony; certain clays and aluminosilicates including china clay (kaolin), calcined clay; montmorillonite (including bentonite and fullers earth) slate powder, and mica (comprising muscovite, suzorite and phlogopite); borax; colemanite; silica flour; quartz (including silica spheres such as those produced from fuel ash); kieselguhr; talc; calcium silicate (including wollastonite); barytes (barium sulphate); gypsum (hydrated calcium sulphate); fluorspar or mixtures of 2 or more of the above mentioned fillers. Among the fillers that can be used are those of low density such as cork or vermiculite which have the effect of lowering the specific gravity of the finished sheet.

Unlike the asbestos reinforced sheets produced in the UK Patent 1,068,064 and 1,199,283 the glass fibre reinforced sheets in this invention have anisotropic properties. This may be used to advantage for some purposes, and to obtain more uniform properties sheets may be laminated together with their axes perpendicular or at desired angles. Another way of reducing anisotropy is to add an extra layer of reinforcement at lamination stage in the form of a cloth mat or scrim. This may be composed of any suitable type of discontinuous fibres (e.g., chopped strand mat) or continuous fibres (for example a woven cloth or open weave scrim) provided that the fibres retain their integrity at the temperature employed in lamination. The fibres may be coated with an appropriate size or bonding agent to promote adhesion to the polymer. Preferably the extra layer of reinforcement is placed between the sheets before they are pressed in the lamination stage. The extra layer of reinforcement is preferably also glass fibres.

The rigid sheets provided by this invention are suitable for moulding. If desired decorative surface layers can be laminated to the sheets to render them more attractive in appearance and thus suitable for use as, for example, wall panelling.

Examples will now be given of the production of rigid sheets reinforced with glass fibres.

### Examples 1 to 6

In examples 1—6 detailed in Tables 1 and 2 4200 gms of a paste making PVC homopolymer commercially available under the trademark Breon P130/1 plus 750 gms of a PVC suspension polymer ('Breon S110/10') plus 1050 gms of a copolymer of PVC and polyvinyl acetate ('Corvic R46/88') plus 270 gms of dicyandiamide (D.C.D.A.) were stirred into 8 kg of toluene.

After 20—30 minutes mixing the mixture was added to a spike mixer containing 1500 gms of 6 mm chopped strand glass fibre (Owens Corning 'OCF409' in examples 1—4 and TBA Industrial Products Ltd. XGS.1347 in examples 5 and 6) and 6 kg total filler in finely divided form, detailed in Tables 1 and 2. After about 1 hours mixing 100 gms of a modified acrylonitrile copolymer latex ('Breon 1577') was added (the tables show the dry weight percentage) and mixing continued for a further 30 minutes.

The dough from this operation was removed to the nip of a calender and built up to a sheet as described in BP 1,068,064.

Several of these sheets were laminated together between heated press plates to form a pressed sheet about 3 mm thick. Layers of 'cellophane' (Registered Trade Mark) were interposed between the outer plies and the press plates to prevent sticking. The sheet was cut into suitable test pieces in both the direction of calendering ('A' direction) and perpendicular to it ('B' direction) and the test results are shown in Tables 1 and 2.

### Example 7—10

In examples 7—10 detailed in Table 3 the glass used was XGS.1347 in all cases the fibres being 6 mm long except where marked otherwise. They were prepared in the same way as examples 1—6 except that in pressing the calendered sheets rigid PVC foils were incorporated to give a product faced both sides with these coloured foils. Properties are shown in Table 3.

### Examples 11—13

These were prepared as in examples 1—6 except that in stacking the dried, calendered sheets for press lamination the various plies were cross plied alternately in a symmetrical way about the centre of the sheet. This resulted in an ABABA type of lay-up and rigid PVC foils were applied to the outside surfaces. Formulation details and results of tests on these boards are shown in Table 4.

### Examples 14—15

These were prepared as in Examples 11—13 but no rigid PVC foils were included in the pressed boards. Details of formulations and their properties are shown in Table 5.

## Example 16

To 200 litres of toluene were added 58 kg of a paste making PVC homopolymer commercially available from ICI under the trade mark 'Corvic P65/50', plus 14 kg of PVC copolymer ('Corvic R46/88') being a copolymer of polyvinyl chloride and polyvinyl acetate, plus 10 kg of a suspension homopolymer PVC 'Breon S110/10' available from BP Chemicals Limited plus 3.8 kg of dicyandiamide stabiliser together with 200 gms of carbon black. The mixture was homogenised to a pumpable fluid in a mixer with a high speed agitator. After 20 minutes the fluid was pumped into a spike mixer containing

50 kg ground dolomite (Micromilling Ltd.)
28 kg ground limestone flour (Grade HN90 ex C.E. Ramsden & Co. Ltd.)
8 kg granulated cork (Grade V-2/5 ex Cork Growers Ltd.)
22 kg of 6 mm chopped strand glass fibre. Sold as ECR.1347 by TBA Industrial Products Ltd.

which had previously been mixed together by operation of the spike mixer. After adding the PVC solution the spike mixer was run for 40 mins. after which an addition of 7.5 kg of a modified acrylonitrile copolymer latex (Breon 1577 available from BP Chemicals Ltd.) was added and mixing continued for a further 30 mins.

The dough like mass was transferred to the nip of a calender and a laminated sheet was built up to a thickness of 0.75 mm as described in UK 1,068,064.

Five of these calendered sheets after drying and trimming to size were stacked in a press between PVC rigid coloured foils (the outer surfaces of the outer calendered sheets having been treated with a pigment/PVC/stabilizer system similar to that described in BP 1,068,064) to produce a board 3 mm thick which had the following properties (A and B referring to the axes in the plane of the board).

|  | 'A' Direction | 'B' Direction |
|---|---|---|
| Tensile Strength (MPa) | 57 | 29 |
| Flex. Strength (MPa) | 100 | 63 |
| Flex modulus (GPa) | 5.5 | 4.3 |
| Izod impact strength (J/m) | 92 | 30 |
| DTUL (°C) distortion temperature under load of 1.81 MN/m² | 78 | |
| S.G. | 1.74 | |

## Example 17

Four calendered sheets were prepared exactly as described in Example 1, using the same formulation.

Two such sheets were placed on each side of a phenolic-resin-impregnated glass scrim of mesh size 5 mm square, and stacked in a press between PVC rigid coloured foils, to produce a board approximately 3 mm thick. The properties of the board are tabulated below.

|  | 'A' Direction | 'B' Direction |
|---|---|---|
| Tensile Strength (MPa) | 68 | 64 |
| Flex. Strength (MPa) | 104 | 81 |
| Flex. Modulus (GPa) | 6.9 | 5.2 |
| Izod Impact Strength (J/m) | 230 | 370 |
| S.G. | 1.79 | — |
| DTUL — 1.81 MPa (°C) | 87 | 91 |

It can be seen that the additional reinforcing layer results in reduced anisotropy and greatly enhanced impact strength, as compared to the board of Example 1.

### Examples 18—19

Calendered sheet was prepared as in Example 16 except it was based on the following ingredients; 145 litres toluene, 15.8 kg Corvic P65/50 12 kg Corvic R46/88 60 kg Breon S110/10 200 gms of carbon black, 54 kg limestone flour 24 kg cork, 30 kg 6 mm chopped strand glass, 10 kg Breon 1577 (wet weight).

Pressed sheet made from plies of this formulation aligned in the same direction and having PVC foils on both faces exhibited the properties shown in Example 18 — Table 6.

Example 19 — the pressed sheet of Table 6 was made with the same sheets as in Example 18 but contained 1 layer of a glass scrim as in Example 17.

### Example 20

To 7 kg toluene was added 4400 gms of a chlorinated PVC suspension polymer having a chlorine content of 65.5% (Lucolour RB 8065 from Rhone-Poulenc) and the mixture stirred vigorously for 30 mins. The mix (it did not completely dissolve) was added to a spike mixer containing 1500 gms 6 mm chopped glass fibres, 2700 gms of pulverised fuel ash and 1200 gms of limestone flour, and mixed for 1 hour. After addition of 600 gms (wet weight) of Breon 1577 and mixing for a further 30 mins. the dough was calendered into a sheet using a hot bowl temperature of 280°F. After drying and pressing between PVC foils the 3 mm thick board was tested and found to have a tensile strength of 72 MPa in the 'A' direction and 36 MPa in the 'B' direction.

**0 001 013**

TABLE 1

| Example No. | 1 | 2 | 3 |
|---|---|---|---|
| % Glass Fibre | 11 | 11 | 11 |
| Filler System | 42% Colemanite | 42% Calcium Hydroxide | 28% Talc<br>14% Chelford Sand |
| Polymeric System | 30% Breon P130/1 | 30% Breon P130/1 | 30% Breon P130/1 |
| | 5% Breon S110/10 | 5% Breon S110/10 | 5% Breon S110/10 |
| | 7% Corvic R46/88 | 7% Corvic R46/88 | 7% Corvic R46/88 |
| | 2% D.C.D.A. | 2% D.C.D.A. | 2% D.C.D.A. |
| | 3% Breon 1577 | 3% Breon 1577 | 3% Breon 1577 |
| Properties SG | 1.89 | 1.70 | 1.87 |
| Tensile Strength (MPa) A | 32 | 59 | 51 |
| B | 10 | 34 | 23 |
| Flexural Strength (MPa) A | 78 | 90 | 85 |
| B | 46 | 54 | 48 |
| Flexural Modulus (GPa) A | 8.5 | 9.3 | 8.3 |
| B | 5.2 | 7.5 | 5.8 |
| Izod Impact Strength (J/m) A | 83 | 52 | 67 |
| B | 33 | 18 | 27 |
| DTUL (°C) | — | — | 83 |

**0 001 013**

TABLE 2

| Example No. | 4 | 5 | 6 |
|---|---|---|---|
| % Glass Fibre | 10 | 11 | 12 |
| Filler System | 36% Calcined Magnesite | 28% China Clay | 34% Dolomite |
| | 3% Granulated Rubberised Cork | 7% Dolomite | 8% Vermiculte (Exfoliated) |
| | | 7% Granulated Rubberised Cork | |
| Polymeric System | 28% Breon P130/1 | 30% Breon P130/1 | 8% Corvic P65/50 |
| | 5% Breon S110/10 | 5% Breon S110/10 | 20% Breon S110/10 |
| | 7% Corvic R46/88 | 7% Corvic R46/88 | 6% Corvic R46/88 |
| | 6% Farina Starch | 2% D.C.D.A. | 2% Breon 1577 |
| | 2% D.C.D.A. | 3% Breon 1577 | |
| | 3% Breon 1577 | | |
| Properties | | | |
| SG | 1.78 | 1.78 | 1.93 |
| Tensile Strength (MPa)  A | 43 | 53 | 68 |
| B | 24 | 21 | 24 |
| Flexural Strength (MPa)  A | 71 | 94 | 142 |
| B | 40 | 48 | 59 |
| Flexural Modulus (GPa)  A | 7.9 | 7.6 | 11.2 |
| B | 6.0 | 5.3 | 8.3 |
| Izod Impact Strength (J/m)  A | 60 | 90 | 130 |
| B | 19 | 44 | 67 |
| DTUL (°C) | 86 | 78 | 85 |

**0 001 013**

TABLE 3 (a)

| Example No. | 7 | 8 |
|---|---|---|
| % Glass Fibre | 15 (3 mm) | 11 |
| Filler System | 27% Limestone Flour | 14% Dolomite |
| | 12% Cork | 26% Limestone 2% Cork |
| Polymeric System | 8% Corvic P65/50 | 30% Corvic P65/50 |
| | 30% Breon S110/10 | 5% Breon S110/10 |
| | 6% Corvic R46/88 | 7% Corvic R46/88 |
| | 2% Breon 1577 | 2% D.C.D.A. |
| | | 3% Breon 1577 |
| **Properties** SG | 1.64 | 1.76 |
| Tensile Strength (MPa) A | 63 | 81 |
| B | 35 | 31 |
| Flexural Strength (MPa) A | 122 | 120 |
| B | 89 | 70 |
| Flexural Modulus (GPa) A | 6.1 | 6.0 |
| B | 4.9 | 5.0 |
| Izod Impact Strength (J/m) A | 126 | 115 |
| B | 68 | 42 |
| D.T.U.L. (°C) | 84 | 87 |

8

**0 001 013**

TABLE 3 (b)

| | 9 | 10 |
|---|---|---|
| Example No. | 9 | 10 |
| % Glass Fibre | 15 | 5 |
| Filler System | 27% Vermiculite (Unexfoliated) | 20% Mica |
| | | 15% Cork |
| | | 14% Pulverised Fuel Ash |
| Polymeric System | 8% Corvic P65/50 | 33% Breon S110/10 |
| | 30% Breon S110/10 | 10% Corvic R44/88 |
| | 6% Corvic R44/88 | 3% Breon 1577 |
| | 2% Breon 1577 | |

| Properties | | 9 | 10 |
|---|---|---|---|
| | SG | 1.59 | 1.58 |
| Tensile Strength (MPa) | A | 61 | 39 |
| | B | 35 | 22 |
| Flexural Strength (MPa) | A | 113 | 79 |
| | B | 74 | 55 |
| Flexural Modulus (GPa) | A | 6.1 | 5.7 |
| | B | 4.8 | 3.8 |
| Izod Impact Strength (J/m) | A | 164 | 41 |
| | B | 79 | 24 |
| D.T.U.L. (°C) | | — | — |

9

**0 001 013**

TABLE 4

| Example No. | | 11 | 12 | 13 |
|---|---|---|---|---|
| % Glass Fibre | | 11 | 25 | 30 |
| Filler System | | 25% Dolomite | 17% Vermiculite (Exfoliated) | 24% Vermiculite (Exfoliated) |
| | | 14% Limestone | 12% Pulverised Fuel Ash | |
| | | 4% Cork | | |
| Polymeric System | | 20% Corvic P65/50 | 33% Breon S110/10 | 33% Breon S110/10 |
| | | 7% Corvic R46/88 | 10% Corvic R44/88 | 10% Corvic R44/88 |
| | | 5% Breon S110/10 | 3% Breon 1577 | 3% Breon 1577 |
| | | 2% D.C.D.A. | | |
| | | 3% Breon 1577 | | |
| Properties | SG | 1.75 | 1.72 | 1.73 |
| Tensile Strength (MPa) | A | 42 | 74 | 75 |
| | B | 36 | 66 | 70 |
| Flexural Strength (MPa) | A | 91 | 140 | 149 |
| | B | 75 | 113 | 115 |
| Flexural Modulus (GPa) | A | 7.2 | 8.0 | 8.7 |
| | B | 6.1 | 6.4 | 6.2 |
| Izod Impact Strength (J/m) | A | 62 | 93 | 147 |
| | B | 46 | 82 | 121 |
| D.T.U.L. (°C) | A | 77 | — | |

**0 001 013**

TABLE 5

| Example No. | 14 | 15 |
|---|---|---|
| % Glass Fibre | 25 (6 mm) | 22 (3 mm) |
| Filler System | 27% Fluorspar | 24% Limestone |
| | 8% Cork | 4% Cork |
| Polymeric System | 19% Corvic P65/50 | 12% Corvic P65/50 |
| | 12% Breon S110/10 | 29% Breon S110/10 |
| | 7% Corvic R46/88 | 7% Corvic R46/88 |
| | 2% Breon 1577 | 2% Breon 1577 |
| Properties S.G. | 1.76 | 1.76 |
| Tensile Strength (MPa) A | 51 | 71 |
| B | 49 | 63 |
| Flexural Strength (MPa) A | 121 | 130 |
| B | 99 | 108 |
| Flexural Modulus (GPa) A | 8.1 | 8.9 |
| B | 6.2 | 7.4 |
| Izod Impact J/m A | 172 | 92 |
| B | 145 | 93 |
| DTUL (°C) | — | 85 |

# 0 001 013

TABLE 6

| Example No. | | 18 | 19 |
|---|---|---|---|
| Tensile Strength | | | |
| (MPa) | A | 76 | 78 |
| | B | 41 | 54 |
| Flexural Strength | | | |
| | A | 137 | 130 |
| | B | 83 | 105 |
| Flexural Modulus | | | |
| (GPa) | A | 5.6 | 6.3 |
| | B | 4.6 | 5.0 |
| Izod Impact Strength | | | |
| (J/m) | A | 97 | 228 |
| | B | 48 | 305 |
| S.G. | | 1.64 | 1.63 |
| DTUL (°C) | A | 86 | 82 |
| | B | 76 | 86 |

## Claims

1. A rigid sheet comprising a polymeric constituent formed from a monomer or monomers in which vinyl chloride at least predominates, fibres and a particulate filler, the fibres and filler being uniformly dispersed throughout and the fibres all lying in, or substantially in, the plane of the sheet, characterised in that the fibres are glass fibres, the amount of glass fibre being in the range 5 to 30 per cent by weight of the total weight of the sheet, the amount of filler being in the range 20 to 50 per cent and the amount of polymeric constituent being in the range 30 to 75 per cent.

2. A rigid sheet according to claim 1 in which the polymeric constituent is a mixture of vinyl chloride homopolymer with a copolymer of vinyl chloride which is soluble in an organic solvent.

3. A rigid sheet according to claim 2 in which said copolymer is a vinyl chloride/vinyl acetate copolymer or vinyl chloride/vinylidene chloride copolymer.

4. A rigid sheet according to claim 1 in which the polymeric constituent is a chlorinated polymer containing up to 70 per cent by weight of combined chlorine.

5. A rigid sheet according to claim 1, 2, 3 or 4 in which the glass fibre is chopped strand of length 3 mm to 6 mm, with a surface dressing promoting adhesion to said polymeric constituents.

6. A rigid sheet according to any one of the preceding claims in which the amount of glass fibre is in the range 8 to 20 per cent by weight.

7. A rigid sheet according to any one of the preceding claims in which the ratio by weight of filler to glass fibres is greater than 1:1.

8. A rigid sheet according to claim 7 in which the ratio by weight of filler to glass fibres is between 1:1 and 4:1.

9. A rigid sheet according to any one of the preceding claims which includes as additional reinforcement at least one cloth, mat or scrim in the plane of the sheet.

10. A rigid sheet according to claim 8 which includes at least one scrim of a glass fibre material.

11. A rigid sheet according to any one of the preceding claims which comprises a plurality of laminations each of which has been built up as successive very thin layers to ensure that the glass fibres lie in the plane of the sheet.

12. A rigid sheet according to claim 11 when dependant upon claim 9 or 10 in which the additional reinforcement is sandwiched between a pair of said laminations.

## Revendications

1. Feuille rigide comprenant un constituant polymère formé à partir d'un ou plusieurs monomères où le chlorure de vinyle au moins prédomine, de fibres et d'une charge en particules, les fibres et la charge étant dispersées uniformément et les fibres étant toutes disposées ou pratiquement disposées dans le plan de la feuille, caractérisée en ce que les fibres sont des fibres de verre, la quantité de fibres de verre est comprise entre 5 et 30% en poids par rapport au poids total de la feuille, la quantité de charge est comprise entre 20 et 50% et la quantité de constituant polymère est comprise entre 30 et 75%.

12

2. Feuille rigide selon la revendication 1, où le constituant polymère est un mélange d'un homopolymère de chlorure de vinyle et d'un copolymère de chlorure de vinyle qui est soluble dans un solvant organique.

3. Feuille rigide selon la revendication 2, où le copolymère est un copolymère de chlorure de vinyle et d'acétate de vinyle ou un copolymère de chlorure de vinyle et de chlorure de vinylidène.

4. Feuille rigide selon la revendication 1, où le constituant polymère est un polymère chloré contenant jusqu'à 70% en poids de chlore combiné.

5. Feuille rigide selon l'une quelconque des revendications 1 à 4, où les fibres de verre sont de la verranne longue de 3 mm à 6 mm, avec un ensimage superficiel favorisant l'adhésion au constituant polymère.

6. Feuille rigide selon l'une quelconque des revendications précédentes, où la quantité de fibres de verre est comprise entre 8 et 20% en poids.

7. Feuille rigide selon l'une quelconque des revendications précédentes, où le rapport pondéral de la charge aux fibres de verre est supérieur à 1/1.

8. Feuille rigide selon la revendication 7, où le rapport pondéral de la charge aux fibres de verre est compris entre 1/1 et 4/1.

9. Feuille rigide selon l'une quelconque des revendications précédentes, qui renferme comme renforcement additionnel au moins un tissu mat ou non tissé à couches superposées biaisées dans le plan de la feuille.

10. Feuille rigide selon la revendication 8, qui renferme au moins un tissu non tissé de fibres de verre à couches superposées biaisées.

11. Feuille rigide selon l'une quelconque des revendications précédentes, qui renferme plusieurs stratifications dont chacune a été formée par des couches successives très minces pour assurer que les fibres de verre soient disposées dans le plan de la feuille.

12. Feuille rigide selon la revendication 11, avec rattachement à la revendication 9 ou 10, dans laquelle le renforcement additionnel est intercalé entre une paire desdites stratifications.

## Patentansprüche

1. Steife Folie aus einem polymeren Bestandteil, der aus einem Monomeren oder Monomeren, in denen wenigstens Vinylchlorid überwiegt, gebildet worden ist, Fasern und einem in Form von Einzelteilchen vorliegenden Füllstoff, wobei die Fasern und der Füllstoff gleichmäßig verteilt sind und die Fasern alle in der Ebene oder im wesentlichen in der Ebene der Folie liegen, dadurch gekennzeichnet, daß die Fasern Glasfasern sind, wobei die Menge der Glasfasern zwischen 5 und 30 Gew.-%, bezogen auf das Gesamtgewicht der Folie, beträgt, und die Menge an Füllstoff zwischen 20 und 50% liegt und die Menge an polymeren Bestandteil sich zwischen 30 und 75% bewegt.

2. Folie nach Anspruch 1, dadurch gekennzeichnet, daß der polymere Bestandteil eine Mischung aus einem Vinylchloridhomopolymeren mit einem Copolymeren aus Vinylchlorid, das in einem organischen Lösungsmittel löslich, ist.

3. Folie nach Anspruch 2, dadurch gekennzeichnet, daß das Copolymere ein Vinylchlorid/Vinylacetat-Copolymeres oder ein Vinylchlorid/Vinylidenchlorid-Copolymeres ist.

4. Folie nach Anspruch 1, dadurch gekennzeichnet, daß der polymere Bestandteil ein chloriertes Polymeres ist, das bis zu 70 Gew.-% gebundenes Chlor enthält.

5. Folie nach Anspruch 1, 2, 3 oder 4, dadurch gekennzeichnet, daß die Glasfasern aus einem zerkleinerten Strang mit einer Länge von 3 bis 6 mm bestehen und einen Oberflächenüberzug aufweisen, der das Anhaften an die polymeren Bestandteile begünstigt.

6. Folie nach einem der vorhergehenden Ansprüche, dadurch gekennzeichnet, daß die Menge an Glasfasern zwischen 8 und 20 Gew.-% liegt.

7. Folie nach einem der vorhergehenden Ansprüche, dadurch gekennzeichnet, daß das Verhältnis des Gewichts des Füllstoffs zu den Glasfasern größer als 1:1 ist.

8. Folie nach Anspruch 7, dadurch gekennzeichnet, daß das Verhältnis des Gewichts des Füllstoffs zu den Glasfasern zwischen 1:1 und 4:1 liegt.

9. Folie nach einem der vorhergehenden Ansprüche, dadurch gekennzeichnet, daß sie als zusätzliche Verstärkung wenigstens ein Tuch, eine Matte oder einen grobgewebten Stoff in der Ebene der Folie enthält.

10. Folie nach Anspruch 8, dadurch gekennzeichnet, daß sie wenigstens eine grobgewebte Matte aus einem Glasfaser-material enthält.

11. Folie nach einem der vorhergehenden Ansprüche, dadurch gekennzeichnet, daß sie aus einer Vielzahl von Schichtungen besteht, von denen jede aufeinanderfolgend als sehr dünne Schicht im Hinblick darauf aufgebaut worden ist, daß die Glasfasern in der Ebene der Folie liegen.

12. Folie nach Anspruch 11 sowie 9 oder 10, dadurch gekennzeichnet, daß die zusätzliche Verstärkung sandwichartig zwischen einem Schichtpaar liegt.